# EUROPÄISCHE PATENTSCHRIFT

(11) **EP 3 911 494 B1**
(45) Veröffentlichungstag und Bekanntmachung des Hinweises auf die Patenterteilung: **19.07.2023**
(21) Anmeldenummer: 19832935.1
(22) Anmeldetag: 19.12.2019
(51) Int. Cl.: B29C 63/02, B29C 63/16, B31F 1/00, B32B 37/10, B25J 18/00, B29C 53/02

(54) **VERFAHREN ZUR PRODUKTION VON KRAFTFAHRZEUGEN UND HIERFÜR GEEIGNETES WERKZEUG**
METHOD FOR THE PRODUCTION OF MOTOR VEHICLES AND TOOL SUITABLE THEREFOR
PROCÉDÉ DE PRODUCTION DE VÉHICULES À MOTEUR ET OUTIL CONVENANT À CETTE FIN

(30) Priorität: 17.01.2019 DE 102019200604
(43) Veröffentlichungstag der Anmeldung: 24.11.2021
(73) Patentinhaber: Karl Wörwag Lack- und Farbenfabrik GmbH & Co. KG, 70825 Korntal-Münchingen (DE)
(72) Erfinder: WARTA, Helge, 71254 Ditzingen (DE)
(74) Vertreter: f & e patent
(86) Internationale Anmeldenummer: PCT/EP2019/086500
(87) Internationale Veröffentlichungsnummer: WO 2020/148070

(56) Entgegenhaltungen:
- WO-A1-2020/148070
- DE-A1- 4 233 622
- DE-A1-102010 021 892

## Beschreibung

Die nachfolgend beschriebene Erfindung betrifft ein Verfahren zur Produktion von Kraftfahrzeugen, bei dem eine Klebefolie auf eine Oberfläche einer Kraftfahrzeugkarosserie aufgebracht wird. Weiterhin betrifft die Erfindung ein hierfür geeignetes Werkzeug.

Klebefolien gewinnen in der Serienproduktion von Kraftfahrzeugen zunehmend Verwendung. Sie können sowohl dekorativ eingesetzt werden, beispielsweise um ein Farbmuster auf eine Karosserieoberfläche zu übertragen, als auch funktional, beispielsweise als Steinschlagschutz für lackierte Oberflächen oder zur Aufbringung von Schriftzügen, Modellbezeichnungen und ähnlichem.

In der Regel ist der Aufwand, der etwa beim Aufbringen eines Farbmusters mittels einer Klebefolie entsteht, deutlich geringer als bei der Bildung solcher Muster in einem mehrstufigen Lackierprozess. Allerdings ist das Aufbringen von Klebefolien in einer Serienproduktion alles andere als trivial. Je größer die Klebefolie ist, desto schwieriger ist es, sie richtig auf der zu beklebenden Oberfläche zu positionieren und ohne Lufteinschlüsse und Faltenbildung zu verkleben. Eine Automatisierung dieser Prozesse ist bislang nicht gelungen. Vielmehr wird die Applikation von Klebefolien in der Serienproduktion von Kraftfahrzeugen bis heute manuell durchgeführt.

Aus der US 6197397 B1 sind Klebefolien bekannt, die mikrostrukturierte Kanäle innerhalb der Klebeschicht umfassen. Diese Kanäle sollen das Entweichen von Luft bei der Applikation der Klebefolien ermöglichen um Lufteinschlüsse zu vermeiden und manuelle Nacharbeiten zur Entfernung derselben überflüssigzu machen. Solche Klebefolien sind zum einen abersehrteuer. Zum anderen eignen sie sich aufgrund der mikrostrukturierten Klebeschicht weniger zur Bildung hochwertiger Oberflächen. In der Regel umfassen Klebefolien eine Trägerfolie, deren eine Seite mit einer Klebeschicht bedeckt ist und deren andere Seite mit einer gegebenenfalls mehrlagigen Lackschicht. Bei der Verwendung sehr dünner Trägerfolien hinterlässtdie Mikrostruktur auch nach dem Aufkleben noch sichtbare Spuren. Die Verwendung von besonders dicken Klebefolien ist grundsätzlich nicht gewünscht. Mit dicken Folien lässt sich das Problem zwar lösen. Diese tragen aber stark auf dem Substrat auf. Ohne Überlackierung mit einem Klarlack führt auch dies nicht zu zufriedenstellenden Ergebnissen.

Die DE 42 33 622 A1 betrifft ein Membranpressverfahren zum Beschichten eines Werkstückes mit einer thermoplastischen Folie, Furnier oder sonstigem thermoplastischem Material, dass die zur Aktivierung sowie Vernetzung des Klebstoffes und Plastifizierung der thermoplastischen Folie, Furniere oder des sonstigen thermoplastischen Materials notwendige Wärme unmittelbar durch Luftkonvenktion an den Klebstoff und die Folie, das Furnier oder das sonstige thermoplastische Material herangeführt und das Pressverfahren anschließend durchgeführt wird.

Die DE 10 2010 021 892 A1 betrifft ein Verfahren zur Herstellung eines, mit einem Schichtstoff kaschierten 3D-Trägerteils und eine Vorrichtung zur Durchführung dieses Verfahrens.

Der nachfolgend beschriebenen Erfindung lag die Aufgabe zu Grunde, eine Lösung für diese Probleme bereitzustellen. Insbesondere sollten ein automatisiertes, Verfahren und Werkzeug zum Aufbringen von Klebefolien entwickelt und in eine Serienproduktion von Kraftfahrzeugen, insbesondere eine dafür vorgesehene Fertigungsstraße, integriert werden.

Zur Lösung dieser Aufgabe schlägt die Erfindung das Verfahren zur Produktion von Kraftfahrzeugen mit den in Anspruch 1 genannten Merkmalen und das Werkzeug mit den in Anspruch 11 genannten Merkmalen vor. Weiterbildungen der Erfindung sind Gegenstand von Unteransprüchen.

Das erfindungsgemäße Verfahren zur Produktion von Kraftfahrzeugen umfasst stets die Schritte
a. Beschichtung einer Kraftfahrzeugkarosserie mit mindestens einem Lack,
b. Trocknen und/oder Aushärten des mindestens einen Lacks,
c. Montage von Anbauteilen an tragende Komponenten der mit dem getrockneten und/oder ausgehärteten mindestens einen Lack beschichteten Kraftfahrzeugkarosserie und
d. Aufbringen einer Klebefolie, die eine Klebeschicht umfasst, auf eine Oberfläche der mit dem getrockneten und/oder ausgehärteten mindestens einen Lack beschichteten Kraftfahrzeugkarosserie oder eines der daran montierten Anbauteile.

Ein Klarlackauftrag ist nach dem Aufbringen der Klebefolie gemäß der Erfindung nicht vorgesehen.

Besonders zeichnet sich das Verfahren dadurch aus, dass zum Aufbringen der Klebefolie
e. die Klebefolie mit Hilfe eines automatisierten Systems zwischen der Oberfläche und einer elastischen Membran positioniert wird und
f. die elastische Membran zumindest bereichsweise in einen gewölbten Zustand mit einer konvexen und einer konkaven Seite überführt wird und mit der konvexen Seite voran mit der Oberfläche kontaktiert wird so dass die Klebeschicht der Klebefolie von der Membran vollflächig an die Oberfläche gepresst wird.

Ganz entscheidend für das Verfahren ist der Einsatz der gewölbten Membran. In Folge der Wölbung ergibt sich beim Kontaktieren der Oberfläche ein initialer punktförmiger Kontaktbereich, in dem die Klebeschicht der Klebefolie an die Oberfläche gepresst wird, da zuerst der höchste Punkt der Wölbung die Klebefolie an die Oberfläche drückt. Bei einer weiteren Annäherung der Membran an die Oberfläche oder einer Verstärkung der Wölbung und in der Folge einer Erhöhung des Anpressdrucks breitet sich der Kontaktbereich dann radial aus, bis die Klebeschicht die Oberfläche vollflächig kontaktiert.

Der Begriff "Anbauteil" ist im Kontext der Erfindung weit auszulegen. Hiervon sind zum einen nicht lackierte Teile wie Scheiben oder Scheinwerfer umfasst, zum anderen aber auch lackierte Teile wie eine Motorhaube, eine Tür, ein Kotflügel und ein Dachelement oder gefärbte Kunststoffteile. Gegebenenfalls wurde auf diese Anbauteile separat von der Kraftfahrzeugkarosserie ein Lack aufgebracht und getrocknet und/oder ausgehärtet.

Bevorzugt werden die Membran und die Klebefolie bei dem Verfahren derart über der zu beklebenden Oberfläche positioniert, dass der initiale Kontaktbereich in einem zentralen Bereich der Klebefolie und der zu beklebenden Oberfläche gebildet wird, so dass sich der Kontaktbereich von da aus in Richtung der Ränder der Klebefolie ausbreitet. Hierdurch wird die Gefahr von Lufteinschlüssen minimiert.

Bei manueller Applikation einer Klebefolie ist ein solches Vorgehen kaum möglich. Um eine korrekte Positionierung der Klebefolie auf der Oberfläche zu gewährleisten, wird manuell stets zuerst ein Rand eine Klebefolie ausgerichtet und angedrückt.

Bei dem mindestens einen Lack handelt es sich bevorzugt um einen üblichen mehrlagigen Automobillack. Karosserien und Karosserieteile werden in aller Regel grundiert, mit einem Basislack lackiert und abschließend mit einem Klarlacküberzug versehen. Die hierfür erforderlichen Arbeits- und Zwischenschritte sind bekannt. Für die vorliegende Erfindung ist lediglich wichtig, dass der mindestens eine Lack auf dem zu beklebenden Substrat getrocknet und ausgehärtet ist, also eine druckfeste Oberfläche bietet und kein Lösungsmittel mehr enthält.

Eine erste, besonders bevorzugte Ausführungsform des erfindungsgemäßen Verfahrens (Variante A) zeichnet sich durch die unmittelbar folgenden zusätzlichen Schritt a. und b. aus:
a. Die elastische Membran wird zumindest bereichsweise in den gewölbten Zustand mit der konvexen und der konkaven Seite überführt, und
b. die Membran wird von dem automatisierten System mit der konvexen Seite voran soweit an die Oberfläche herangeführt, bis die Klebeschicht der Klebefolie von der Membran vollflächig an die Oberfläche gepresst wird.

Grundsätzlich ist bei dieser Ausführungsform eine vollständige zeitliche Überlappung der beiden Schritte a. und b. möglich. Bevorzugt ist Schritt a. aber vor Schritt b. abgeschlossen und weiter bevorzugt wird Schritt b. erst nach Abschluss von Schritt a. durchgeführt.

Eine zweite, besonders bevorzugte Ausführungsform des erfindungsgemäßen Verfahrens (Variante B) zeichnet sich durch die unmittelbar folgenden zusätzlichen Schritt a. bis c. aus:
a. Die elastische Membran wird in einem Schritt von dem automatisierten System an die Oberfläche herangeführt und
b. die Membran wird zumindest bereichsweise in einen gewölbten Zustand mit einer konvexen und einer konkaven Seite überführt und
c. die Wölbung wird verstärkt bis die Klebeschicht der Klebefolie von der konvexen Seite der Membran vollflächig an die Oberfläche gepresst wird.

Grundsätzlich ist bei dieser Ausführungsform eine vollständige zeitliche Überlappung der drei Schritte möglich. Bevorzugt ist Schritt a. aber vor Schritt b. abgeschlossen und weiter bevorzugt werden die Schritte b. und c. erst nach Abschluss von Schritt a. durchgeführt.

In einer bevorzugten Weiterbildung der Erfindung zeichnet sich die in dem Verfahren einsetzbare Klebefolie durch mindestens eines der unmittelbar folgenden Merkmale a. bis h. aus:
a. Die Klebefolie umfasst eine Trägerfolie, die auf einer Seite die Klebeschicht und auf einer anderen Seite eine Lackschicht aufweist.
b. Die Trägerfolie ist eine Kunststofffolie, eine Metallfolie oder eine Metall-Kunststoff-Kompositfolie.
c. Die Trägerfolie weist eine Dicke im Bereich von 10 µm bis 120 µm auf.
d. Die Klebeschicht weist eine Dicke im Bereich von 10 µm bis 80 µm, bevorzugt von 30 µm bis 60 µm, auf.
e. Die Klebeschicht weist eine gleichmäßige Dicke auf.
f. Die Klebeschicht besteht aus einer homogenen Klebemasse.
g. Die Klebeschicht weist eine Fläche im Bereich von 10 cm² bis 8 m² auf.
h. Die Lackschicht weist eine Dicke im Bereich von 20 µm bis 150 µm, bevorzugt von 30 µm bis 90 µm, besonders bevorzugt von 40 µm bis 60 µm, auf.

Besonders bevorzugt sind zumindest die unmittelbar vorstehenden Merkmale a. und b. und g. in Kombination miteinander realisiert. In einer bevorzugten Weiterbildung sind die Merkmale a. bis d. und g. und h., insbesondere a. bis e. und g. und h., in einer besonders bevorzugten Ausführungsform alle Merkmale a. bis h. in Kombination miteinander realisiert.

Das Merkmal e. ist besonders bevorzugt in Kombination mit dem Merkmal f. realisiert. Erfindungsgemäß ist unter einer gleichmäßigen Dicke zu verstehen, dass die Klebeschicht nicht lokal durch Mikrostrukturkanäle zum Abführen von Luft oder sonstige Mikrostrukturen geschwächt ist. Bevorzugt ist sie durch Auftrag einer homogenen Klebermasse mittels eines Rakels gebildet und weist entsprechend eine im Wesentlichen ebene und gleichmäßige Oberfläche auf. Unter "homogen" soll hierbei verstanden werden, dass die Klebermasse keine Partikel enthält.

Der Einsatz mikrostrukturfreier Klebeschichten ermöglicht, dass in dem erfindungsgemäßen Verfahren Klebefolien mit sehr dünnen Trägern verwendet werden und dabei trotzdem hochglänzende "Class A-Oberfläche" erhalten werden können. Innerhalb des oben angegebenen Bereichs von 10 µm bis 120 µm sind Trägerfolien mit einer Dicke von 10 µm bis 60 µm, bevorzugt von 10 µm bis 40 µm, daher weiter bevorzugt, zumindest wenn die Klebeschicht frei von den genannten Mikrostrukturen ist.

In einigen besonders bevorzugten Weiterbildungen der Erfindung zeichnet sich das beanspruchte Verfahren durch mindestens einen der unmittelbar folgenden Schritte a. bis c. aus:
a. Zum Anpressen der Klebefolie wird im Bereich zwischen der zu beklebenden Oberfläche und der Membran ein Unterdruck angelegt.
b. Der Unterdruck wird auf einen Wert ≤ 750 mbar, bevorzugt auf einen Druck im Bereich von 0,5 mbar bis 750 mbar, eingestellt.
c. Die Membran wird durch den Unterdruck oder mit Hilfe des Unterdrucks in den gewölbten Zustand überführt.

Besonders bevorzugt sind zumindest die unmittelbar vorstehenden Schritte a. und b. in Kombination miteinander realisiert, gegebenenfalls alle Schritte a. bis c..

Diese Weiterbildung bezieht sich insbesondere auf die oben beschriebene Variante B des erfindungsgemäßen Verfahrens.

Das Anlegen des Unterdrucks ist insbesondere dann vorteilhaft, wenn die Klebefolie auf eine Oberfläche einer strukturell schwachen Karosseriekomponente aufgeklebt werden soll, beispielsweise auf eine Komponente aus einem sehr dünnen Blech, das beim Anpressen der Klebefolie an die Oberfläche eingedrückt werden könnte. Der Unterdruck ist dem Anpressdruck entgegen gerichtet und stabilisiert damit die zu beklebende Oberfläche. Im Gegenzug kann dann wieder der Anpressdruck erhöht werden.

Eine dritte, besonders bevorzugte Ausführungsform des erfindungsgemäßen Verfahrens (Variante C) zeichnet sich durch die unmittelbar folgenden zusätzlichen Schritte a. bis d. aus:
a. Die elastische Membran wird in einem ersten Schritt von dem automatisierten System an die Oberfläche herangeführt.
b. Im Bereich zwischen der zu beklebenden Oberfläche und der Membran wird in einem zweiten Schritt der Unterdruck angelegt.
c. In einem dritten Schritt wird die Membran mittels des angelegten Unterdrucks in den gewölbten Zustand mit der konvexen und der konkaven Seite überführt und
d. die Wölbung wird mittels des Unterdrucks verstärkt, bis die Klebeschicht der Klebefolie von der konvexen Seite der Membran vollflächig an die Oberfläche gepresst wird.

Grundsätzlich ist in dieser Ausführungsform eine zeitliche Überlappung des Schritts a. mit den übrigen Schritten nicht möglich. Die Schritte b. und c. können grundsätzlich überlappen. Bevorzugt ist allerdings Schritt b. vor Schritt c. abgeschlossen. Es wird also bevorzugt erst der Unterdruck angelegt und dann die Membran in den gewölbten Zustand überführt.

Die Begriffe "Heranführen" und "herangeführt" im Kontext der obenstehenden Merkmale a. bzw. b. in den Varianten A, B und C des erfindungsgemäßen Verfahrens sollen erfindungsgemäß sehr weit ausgelegt werden. Zum Heranführen der Membran an die Oberfläche kann natürlich im einfachsten Fall die Membran auf die Oberfläche zubewegt werden, allerdings kann durchaus umgekehrt auch die Oberfläche selbst auf die Membran zubewegt werden. Von Interesse ist beim Heranführen allein der Abstand der Oberfläche und der Membran zueinander. Ob zur Verringerung des Abstands die Membran oder die Oberfläche oder beide bewegt werden ist nicht entscheidend.

In einer weiteren bevorzugten Weiterbildung der Erfindung zeichnet sich die in dem Verfahren eingesetzte Membran durch mindestens eines der unmittelbar folgenden Merkmale a. bis c. aus:
a. Die verwendete Membran besteht aus einem elastischen Polymermaterial, insbesondere aus Naturkautschuk oder Silikon.
b. Die verwendete Membran weist eine gleichmäßige Dicke auf.
c. Die verwendete Membran weist Schwächungs- und oder Verstärkungsbereiche zur gezielten Beeinflussung der Geometrie des gewölbten Zustands auf.

Besonders bevorzugt sind entweder die unmittelbar vorstehenden Merkmale a. und c. oder b. und c. in Kombination miteinander realisiert.

Eine Beeinflussung der Geometrie des gewölbten Zustands der Membran kann zur Bildung des oben erwähnten punktförmigen Kontaktbereichs erforderlich sein. Wenn etwa eine Vertiefung in der zu beklebenden Oberfläche vorliegt, muss der punktförmige Kontaktbereich idealerweise am tiefsten Punkt der Vertiefung entstehen. Jedenfalls sollte die Bildung eines kreisförmigen Kontaktbereichs vermieden werden, da ansonsten Lufteinschlüsse kaum verhindert werden können.

Ist die Membran beispielsweise in einem Bereich dünner ausgebildet als in einem anderen Bereich, so wird sie sich in diesem Bereich beim Anlegen eines Drucks oder Unterdrucks leichter und weiter wölben als in den übrigen Bereichen. Das umgekehrte gilt im Falle einer Verstärkung der Membran.

Die Einführung von Schwächungs- und oder Verstärkungsbereichen in die Membran kann weiterhin zweckmäßig sein, um die Ausdehnung des Kontaktbereichs zu beeinflussen. Insbesondere beim Aufkleben der Klebefolie auf gebogene Oberflächen, insbesondere auf Oberflächen mit Vertiefungen, kann dies vorteilhaft sein.

In einer weiteren bevorzugten Weiterbildung der Erfindung zeichnet sich das beanspruchte Verfahren durch mindestens einen der unmittelbar folgenden Schritte a. und b. aus:
a. Die Membran wird durch einen Überdruck oder mit Hilfe eines Überdrucks in den gewölbten Zustand überführt.
b. Die Membran wird vor dem Anpressen der Klebefolie erwärmt oder gekühlt.

Mit dem Überdruck kann alternativ zu dem oben beschriebenen Unterdruck gearbeitet werden. Dies ist insbesondere bei Variant A des Verfahrens zweckmäßig. Verfahrenswesentlich ist, dass die erwähnte Wölbung entsteht und es ist von sekundärer Bedeutung, wie die Wölbung gebildet wird, wobei die erwähnte Stabilisierung der zu beklebenden Oberfläche natürlich bei alleiniger Verwendung des Überdrucks nicht auftritt, sehr wohl aber bei einem kombinierten Einsatz von Über- und Unterdruck, der auch möglich ist.

Das Erwärmen der Membran kann völlig unabhängig vom Einsatz von Unter- und Überdruck vorgenommen werden. Durch Erwärmung oder Kühlung der Membran kann beispielsweise Schrumpfungs- oder Streckungseffekten entgegengewirkt werden.

Ein zwischen der zu beklebenden Oberfläche und der Membran angelegter Unterdruck kann, wie oben schon angedeutet, in bevorzugten Ausführungsformen zur Kompensation eines Anpressdrucks variiert werden. Entsprechend zeichnet sich das beanspruchte Verfahren in bevorzugten Ausführungsformen durch mindestens einen der unmittelbar folgenden Schritte a. und b., bevorzugt durch eine Kombination der unmittelbar folgenden Schritte a. und b., aus:
a. Der Unterdruck wird in Abhängigkeit des Drucks, den die Membran über die Klebefolie auf die zu beklebende Oberfläche ausübt, variiert.
b. Bei einem Anstieg des von der Membran ausgeübten Drucks auf die zu beklebende Oberfläche wird der Unterdruck erhöht.

Hierzu kann ein automatisierter Steuerungs- und Regelmechanismus vorgesehen sein, der in Abhängigkeit des Anpressdrucks den Unterdruck automatisch anpasst. Die Drücke können dabei in bevorzugten Ausführungsformen von Sensoren erfasst werden.

In einer besonders bevorzugten Weiterbildung der Erfindung zeichnet sich das beanspruchte Verfahren durch mindestens einen der unmittelbar folgenden Schritte a. bis c. aus:
a. Das Positionieren der Klebefolie zwischen der Oberfläche und der elastischen Membran erfolgt mit Hilfe einer Montagefolie, an der die Klebefolie mit ihrer der Klebeschicht abgewandten Seite haftet.
b. Zum Positionieren der Klebefolie wird die Montagefolie an oder in einem Rahmen fixiert.
c. Nach dem Anpressen der Klebefolie an die Oberfläche wird die Montagefolie von der Klebefolie abgezogen.

Besonders bevorzugt sind zumindest die unmittelbar vorstehenden Schritte a. und c. in Kombination miteinander realisiert, besonders bevorzugt alle Schritte a. bis c..

Da die Klebefolie einschließlich ihrer Ränder an die zu beklebende Oberfläche gepresst werden soll, erleichtert die Montagefolie ihre Positionierung. Nach dem Anpressen der Klebefolie wird die Montagefolie vorzugsweise von der Klebefolie abgezogen.

Die Montagefolie ist bevorzugt dazu ausgebildet, an dem Rahmen fixiert zu werden. Hierzu kann sie Positionierungs- und Fixiermittel aufweisen, die das Fixieren am Rahmen erleichtern.

Bei der Klebefolie handelt es sich beispielsweise um ein Dekor, einen Schriftzug oder einen einzelnen Buchstaben, der auf die zu beklebende Oberfläche aufgebracht werden soll.

Es ist möglich, zeitgleich mehrere an der Montagefolie haftende Klebefolien auf die zu beklebende Oberfläche zu transferieren, beispielsweise wenn ein Schriftzug umfassend mehrere Buchstaben oder Wörter auf die Oberfläche übertragen werden soll. In diesem Fall ist es bevorzugt, die Membran und die Klebefolie derart über der zu beklebenden Oberfläche zu positionieren, dass der initiale Kontaktbereich in einem zentralen Bereich des aus mehreren Klebefolien gebildeten Schriftzugs gebildet wird.

Das erfindungsgemäße Werkzeug dient zum Aufbringen der oben beschriebenen Klebefolie auf die gleichfalls oben beschriebene lackierte Oberfläche einer Kraftfahrzeugkarosserie oder eines daran montierten Anbauteils. Insbesondere eignet es sich zur Durchführung des beschriebenen Verfahrens. Es zeichnet sich stets durch die folgenden Merkmale aus:
a. Es umfasst eine Ausführungsform der oben beschriebenen elastischen Membran.
b. Es umfasst ein Mittel zur Fixierung der Klebefolie in paralleler Ausrichtung zu der Membran.
c. Es umfasst einen Rahmen, der dazu ausgebildet ist, gemeinsam mit der zu beklebenden Oberfläche und der Membran eine Unterdruckkammer zu bilden, in der die Klebefolie angeordnet ist und in welche die Membran sich beim Beaufschlagen der Unterdruckkammer mit einem Unterdruck wölben kann.

Wie bereits beschrieben, ist es besonders vorteilhaft, beim Aufbringen der Klebefolie im Bereich zwischen der zu beklebenden Oberfläche und der Membran einen Unterdruck anzulegen. Hierzu ist der Rahmen vorgesehen.

Die Membran kann zu Temperierzwecken doppelwandig ausgebildet sein und Anschlüsse für ein Temperiermittel wie beispielsweise Wasser aufweisen.

In einigen besonders bevorzugten Ausführungsformen weist die Membran die oben beschriebenen Schwächungs- und/oder Stärkungsbereiche auf.

Da die Klebefolie bevorzugt an der oben beschriebenen Montagefolie haftet, ist das Mittel zur Fixierung der Klebefolie entsprechend bevorzugt ein Mittel zur Fixierung der Montagefolie.

Bei den Mitteln zur Fixierung der Klebefolie oder der Montagefolie kann es sich beispielsweise um Stifte handeln, die zu Löchern in der Klebe- oder der Montagefolie korrespondieren.

In einer bevorzugten Weiterbildung der Erfindung zeichnet sich das Werkzeug durch mindestens eines der unmittelbar folgenden Merkmale a. bis f. aus:
a. Der Rahmen ist rechteckig ausgebildet.
b. Der Rahmen weist eine erste Öffnung auf, die von der Membran verschlossen ist.
c. Der Rahmen umfasst mindestens ein elastisches Dichtelement, das dichtend auf der Oberfläche aufliegen kann.
d. Der Rahmen umfasst eine zweite Öffnung, an deren Rändern das mindestens eine elastische Dichtelement fixiert ist.
e. Der Rahmen umfasst mindestens einen Anschluss für eine Unterdruckquelle, über den die Unterdruckkammer mit Unterdruck beaufschlagt werden kann.
f. Der Rahmen umfasst als Mittel zur Fixierung der Klebefolie mindestens eine Halterung.

Bevorzugt sind zumindest die unmittelbar vorstehenden Merkmale a. bis e. in Kombination miteinander realisiert, besonders bevorzugt alle Merkmale a. bis f..

Das mindestens eine Dichtelement dient zum Abdichten der Unterdruckkammer. Sie bestehen bevorzugt aus elastischen Polymermaterialien, beispielsweise aus dem bereits erwähnten Naturkautschuk. Der mindestens eine Anschluss für die Unterdruckquelle dient zur Erzeugung des Unterdrucks in der Unterdruckkammer.

In einer weiteren bevorzugten Weiterbildung der Erfindung zeichnet sich das Werkzeug durch mindestens eines der unmittelbar folgenden Merkmale a. bis d. aus:
a. Der Rahmen ist aus zwei oder mehr Teilrahmen zusammengesetzt.
b. Der Rahmen ist rechteckig ausgebildet und aus den zwei oder mehr rechteckigen Teilrahmen zusammengesetzt.
c. Der Rahmen umfasst einen ersten rechteckigen Teilrahmen, an dem das mindestens eine elastische Dichtelement fixiert ist und der den mindestens einen Anschluss für die Unterdruckquelle umfasst.
d. Der Rahmen umfasst einen zweiten rechteckigen Teilrahmen, der die mindestens eine Halterung für die Klebefolie umfasst.

Bevorzugt sind zumindest die unmittelbar vorstehenden Merkmale a. bis c. in Kombination miteinander realisiert, besonders bevorzugt alle Merkmale a. bis d..

Beim Einsatz von zwei oder mehrTeilrahmen kann es erforderlich sein, an Verbindungsflächen der Teilrahmen weitere Dichtungselemente vorzusehen um die Dichtigkeit der Unterdruckkammerzu gewährleisten.

Zum Zwecke der oben beschriebenen Steuerung des Unterdrucks kann das Werkzeug eine geeignete Steuerungs- und Regeleinrichtung aufweisen.

In einer weiteren bevorzugten Weiterbildung der Erfindung zeichnet sich das Werkzeug durch mindestens eines der unmittelbar folgenden Merkmale a. bis c., bevorzugt durch eine Kombination der unmittelbar folgenden Merkmale a. und b. oder a. und c., aus:
a. Es umfasst eine Druckausgleichskammer, die unter anderem von der Membran begrenzt wird.
b. Es umfasst einen Anschluss für eine Druck- oder eine Unterdruckquelle, der in die Druckausgleichskammer führt.
c. Es umfasst ein Ventil, über das die Druckausgleichskammer belüftet werden kann.

Diese Druckausgleichskammer wird gegebenenfalls benötigt um die beschriebene Wölbung der Membran zu erzeugen oder zu verstärken. Wenn ein Unterdruck in der Unterdruckkammer angelegt ist, kann es hierzu völlig ausreichend sein, die Druckausgleichskammer über das Ventil zu belüften um die geforderte Wölbung der Membran zu bewirken oder zu verstärken.

Besonders bevorzugt ist das Werkzeug an einem automatisierten System fixiert, beispielsweise dem Arm eines Roboters. Das Werkzeug, bevorzugt einschließlich des automatisierten Systems, ist bevorzugt in einer Fertigungsstrasse zur Produktion von Kraftfahrzeugen angeordnet.

Grundsätzlich eignes sich die beschriebene Vorgehensweise und das beschriebene Werkzeug natürlich nicht nur zum Einsatz in der Produktion von Kraftfahrzeugen. Auch andere Serienprodukte können erfindungsgemäß mit Klebefolien versehen werden, beispielsweise Fahrräder.

Weitere Merkmale und Vorteile der beschriebenen Erfindung ergeben sich aus den nachfolgend beschriebenen Zeichnungen, in denen bevorzugte Ausführungsformen des erfindungsgemäßen Werkzeugs in verschiedenen Stadien des erfindungsgemäßen Verfahrens dargestellt sind. Die dargestellten und beschriebenen Ausführungsformen dienen lediglich zur Erläuterung und zum besseren Verständnis der Erfindung und sind in keiner Weise einschränkend zu verstehen.

### In den Figuren zeigen, jeweils schematisch

Fig. 1 eine Draufsicht auf die Unterseite eines erfindungsgemäßen Werkzeugs,
Fig. 2 eine Teildarstellung eines Schnitts durch das in Fig. 1 dargestellte Werkzeug,
Fig. 3 das in Fig. 1 dargestellte Werkzeug, in dem eine Montagefolie samt einer Klebefolie fixiert ist,
Fig. 4 eine Teildarstellung eines Schnitts durch das in Fig. 3 dargestellte Werkzeug,
Fig. 5 eine an einem Arm eines automatisierten Systems befestigte Ausführungsform eines erfindungsgemäßen Werkzeugs, und
Fig. 6 ein Schnitt durch eine Ausführungsform des erfindungsgemäßen Werkzeugs mit einer modifizierten Membran.

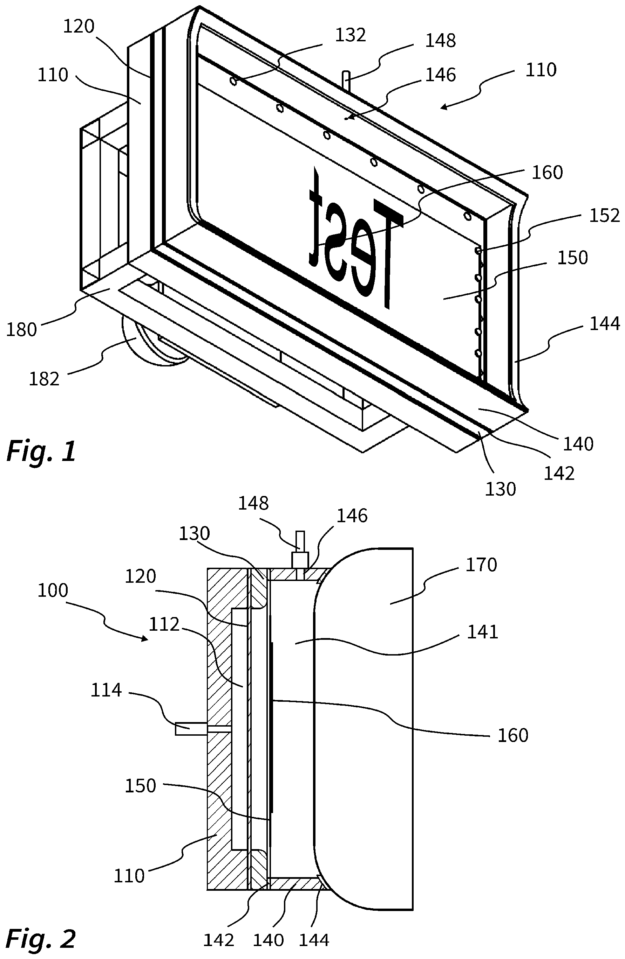

Die Figuren 1 und 2 zeigen ein erfindungsgemäßes Werkzeug 100, das sich zum Aufbringen von Klebefolien 160 auf eine lackierte Oberfläche 170 eines Kraftfahrzeugs eignet.

Vorliegend haften auf der Montagefolie 150 vier separate Klebefolien 160 in Form von vier Buchstaben, die zusammen das Wort "Test" ergeben. Jede der Klebefolien umfasst eine Trägerfolie sowie eine Lackschicht und eine Klebeschicht. In Fig. 1 weist die Klebeschicht nach vorn, während die Buchstaben mit der Lackschicht an der Montagefolie 150 haften. Die Klebefolien 160 sollen auf die Oberfläche 170 übertragen werden.

Das Werkzeug umfasst einen rechteckigen Rahmen, der sich aus dem rechteckigen Teilrahmen 130 und dem rechteckigen Teilrahmen 140 zusammensetzt. Die Teilrahmen 130 und 140 sind luftdicht über die Dichtung 142 verbunden. Die Montagefolie 150 ist an dem Teilrahmen 130 mittels mehrerer Stifte 152 fixiert, sie weist dazu korrespondierende Löcher auf, in die die Stifte 152 eingeschoben sind.

Parallel zu der Montagefolie 150 ist die elastische Membran 120 aus Naturkautschuk angeordnet. Sie ist zwischen der Basisplatte 110 und einem Teilrahmen 130 luftdicht eingespannt. Sie verschließt die durch den Teilrahmen 130 definierte Öffnung des Rahmens. Hierzu sind mehrere Schrauben 132 durch den Teilrahmen 130 in die Basisplatte 110 geschraubt.

Die Basisplatte 110 schließt mit der Membran 120 die Druckausgleichskammer 112 ein. Über das Ventil 114 kann Luft in die Druckausgleichskammer 112 eingelassen werden.

Auf einer Seite der Basisplatte 110 ist eine Unterkonstruktion 180 angebracht, welche über eine Aufnahme 182 zum Anschluss des Werkzeugs 100 an ein Hubwerkzeug oder einen Roboter verfügt.

Der aus den Teilrahmen 130 und 140 bestehende Rahmen ist dazu ausgebildet, gemeinsam mit der zu beklebenden Oberfläche 170 und der Membran 120 eine Unterdruckkammer 141 zu bilden, in der die Montagefolie 150 einschließlich der Klebefolien 160 angeordnet ist und in welche sich die Membran 120 wölben kann, wenn die Unterdruckkammer 141 mit einem Unterdruck beaufschlagt wird. Der Unterdruckrahmen 140 ist zu diesem Zweck auf die Geometrie der Oberfläche 170 angepasst, so dass ein formschlüssiger Kontakt zwischen der Oberfläche 170 und dem Unterdruckrahmen 140 gewährleistet ist.

In Fig. 2 ist dargestellt, wie der Teilrahmen 140 an der Oberfläche 170 anliegt. An den Rändern der durch den Teilrahmen 140 definierten Öffnung des Rahmens ist das elastische Dichtelement 144 fixiert. Über dieses ist der Rahmen dichtend mit der Oberfläche 170 verbunden. Über den mit einer unterdruckquelle gekoppelten Anschluss 148 und den durch den Teilrahmen 140 geführten Kanal 146 kann die Unterdruckkammer 141 evakuiert werden.

Die Membran ist in den Figuren 1 und 2 nicht gewölbt, was bedeutet, dass in der Druckausgleichskammer 112 und der Unterdruckkammer 141 der gleiche Druck herrscht.

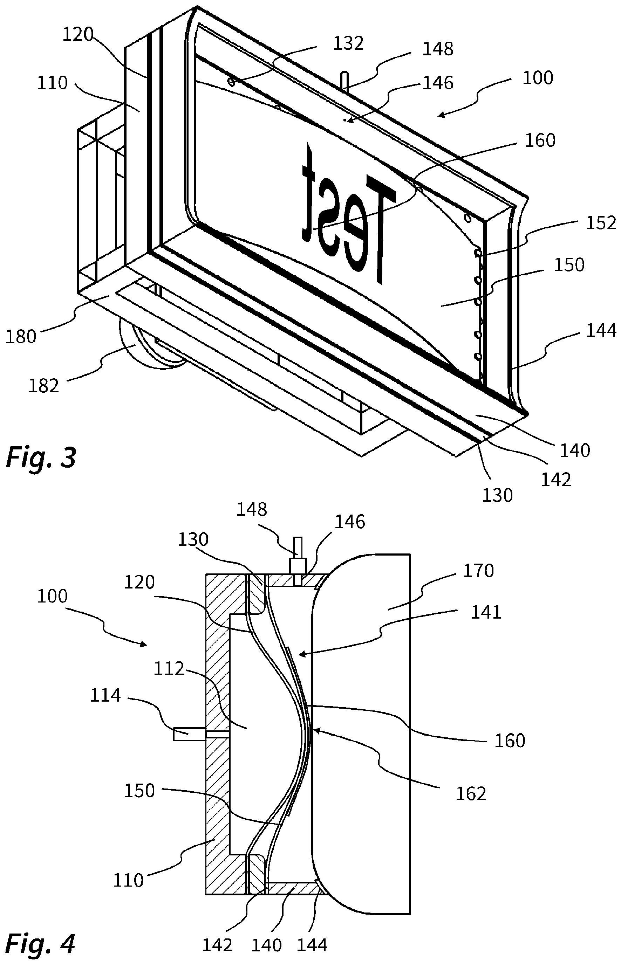

Die Funktionsweise des Werkzeugs 100 und das Prinzip des erfindungsgemäßen Verfahrens wird anhand der Figuren 3 und 4 erläutert. In diesen ist die Membran 120 gewölbt, ihre konvexe Seite kann die Montagefolie 150 und insbesondere die darauf haftende Klebefolie 160 gegen die Oberfläche 170. Bei nicht geschlossener Unterdruckkammer 141 (wie in Fig. 3 dargestellt) kann die Wölbung nur durch einen Überdruck in der Kammer 112 bewirkt werden. Bei geschlossener Unterdruckkammer 141 (wie in Fig. 4 dargestellt) kann ein Unterdruck die Membran 120 in die Kammer ziehen. Das Ventil 114 muss hierzu geöffnet werden.

Durch die Wölbung der Membran 120 wird die Montagefolie 150 mit der Klebefolie 160 an die Oberfläche 170 angepresst. Es bildet sich in der Regel ein erster Kontaktbereich 162 zwischen Klebefolie 160 und der Oberfläche 170, der sich mit stärker werdender Wölbung der Membran 120 radial ausbreitet. Restluft, welchesich gegebenenfalls noch zwischen der Klebefolie 160 und der Oberfläche 170 befindet, kann somit stets nach außen hin auf dem kürzesten Weg entweichen. Beim vorliegenden Einsatz von vier separaten Klebefolien 160 in Form von Buchstaben kann ein erster Kontaktbereich auch zwischen der Montagefolie 150 und der Oberfläche 170 bestehen. Ein Kontakt zwischen den Klebefolien 160 und Oberfläche 170 wird dann erst mit dem radialen Ausbreiten des Kontaktbereichs mit stärker werdender Wölbung der Membran 120 hergestellt.

Der in der Unterdruckkammer 141 bestehende Unterdruck hat den Vorteil, dass die Oberfläche 170 stabilisiert wird und dem durch die Membran 120 ausgeübten Druck, dessen Kraft der Unterdruck entgegengerichtet ist, standhalten kann. Besonders beim Bekleben von Bauteilen mit dünnen Wandstärken oder bei großen Flächen ist dies von großem Vorteil.

Nachdem das Anpressen der Klebefolie 160 an die Oberfläche 170 abgeschlossen ist, können die Unterdruckkammer 141 und die Druckausgleichskammer 112 belüftet werden. Die Membran 120 kann dann wieder in den Ausgangszustand zurückkehren. In der Regel wird dabei die Montagefolie 150 von den Klebefolien 160 abgezogen. Die Klebefolien 160 verbleiben auf der Oberfläche 170.

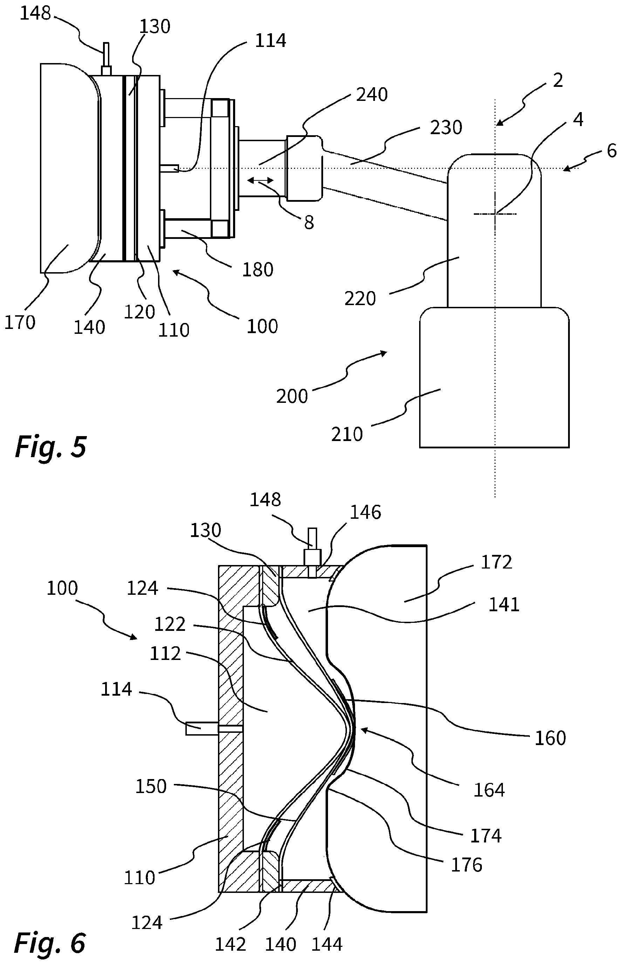

Fig. 5 zeigt eine Ausführungsform, bei der das Werkzeug 100 über die Unterkonstruktion 180 an einem Arm 230 eines automatisierten Systems 200 gekoppelt ist. Das automatische System 200 verfügt über eine Basis 210 mit einem schwenkbaren Oberteil 220. Das Oberteil 220 kann sich um eine Drehachse 2 frei drehen. Der Roboterarm 230 kann um eine Schwenkachse 4 geschwenkt werden. Dies ermöglicht eine Höhenjustierung des Werkzeugs 100.

Zwischen dem Roboterarm 230 und dem Werkzeug 100 ist ein Schubzylinder 240 angeordnet. Der Schubzylinder 240 ist linear entlang einer Verlagerungsrichtung 8 expandierbar. Zusätzlich kann der Schubzylinder 240 um eine Rotationsachse 6 gedreht werden. Somit kann ein genauer Abstand und Ausrichtung zwischen dem Werkzeug 100 und der Oberfläche 170 eingestellt werden.

Fig. 6 zeigt eine alternative Ausführungsform des Werkzeugs 100, bei dem eine modifizierte Membran 122 eingesetzt wird. Ansonsten entspricht der Aufbau des Werkzeugs dem des in den Figuren 1 bis 4 dargestellten Werkzeug. Die modifizierte Membran 122 umfasst lokale Verstärkungen 124, wodurch sich die Membran 122 zunächst in einem zentralen Bereich stärker wölbt als an ihren Rändern. Hierdurch kommt es zu einer spitzeren Wölbung der Membran 122 und somit zu einem kleineren ersten Kontaktbereich 164. Hierdurch lässt sich auch eine Oberfläche 172 mit einer Einbuchtung 174 mit der Klebefolie 160 bekleben lässt. Die spitzere Wölbung ermöglicht es, dass der erste Kontaktbereich 164 am tiefsten Punkt der Einbuchtung 174 der Oberfläche 172 definiert ist. Hierdurch wird verhindert, dass die Klebefolie 160 die Oberfläche 172 zuerst an den Kanten 176 der Einbuchtung 174 kontaktiert.

## Patentansprüche

1. Verfahren zur Produktion von Kraftfahrzeugen, umfassend die Schritte
a. Beschichtung einer Kraftfahrzeugkarosserie mit mindestens einem Lack
b. Trocknen und/oder Aushärten des mindestens einen Lacks
c. Montage von Anbauteilen an tragende Komponenten der mit dem getrockneten und/oder ausgehärteten mindestens einen Lack beschichteten Kraftfahrzeugkarosserie sowie
d. Aufbringen einer Klebefolie (160), die eine Klebeschicht umfasst, auf eine Oberfläche (170; 172) der mit dem getrockneten und/oder ausgehärteten mindestens einen Lack beschichteten Kraftfahrzeugkarosserie oder eines der daran montierten Anbauteile wobei zum Aufbringen der Klebefolie (160)
e. die Klebefolie (160) mit Hilfe eines automatisierten Systems (200) zwischen der Oberfläche (170; 172) und einer elastischen Membran (120; 122) positioniert wird und
f. die elastische Membran (120; 122) zumindest bereichsweise in einen gewölbten Zustand mit einer konvexen und einer konkaven Seite überführt wird und mit der konvexen Seite voran mit der Oberfläche (170; 172) kontaktiert wird so dass die Klebeschicht der Klebefolie (160) von der Membran (120; 122) vollflächig an die Oberfläche (170; 172) gepresst wird.

2. Verfahren nach Anspruch 1, **gekennzeichnet durch** die folgenden zusätzlichen Schritte:
a. die elastische Membran (120; 122) wird zumindest bereichsweise in den gewölbten Zustand mit der konvexen und der konkaven Seite überführt und
b. die Membran (120; 122) wird von dem automatisierten System (200) mit der konvexen Seite voran soweit an die Oberfläche (170; 172) herangeführt, bis die Klebeschicht der Klebefolie (160) von der Membran (120; 122) vollflächig an die Oberfläche (170: 172) gepresst wird.

3. Verfahren nach Anspruch 1, **gekennzeichnet durch** die folgenden zusätzlichen Schritte:
a. Die elastische Membran (120; 122) wird in einem Schritt von dem automatisierten System (200) an die Oberfläche (170; 172) herangeführt und
b. die Membran (120; 122) wird zumindest bereichsweise in einen gewölbten Zustand mit einer konvexen und einer konkaven Seite überführt und
c. die Wölbung wird verstärkt bis die Klebeschicht der Klebefolie (160) von der konvexen Seite der Membran (120; 122) vollflächig an die Oberfläche (170; 172) gepresst wird.

4. Verfahren nach einem der vorhergehenden Ansprüche, **gekennzeichnet durch** mindestens eines der folgenden zusätzlichen Merkmale:
a. Die Klebefolie (160) umfasst eine Trägerfolie, die auf einer Seite die Klebeschicht und auf einer anderen Seite eine Lackschicht aufweist.
b. Die Trägerfolie ist eine Kunststofffolie, eine Metallfolie oder eine Metall-Kunststoff-Kompositfolie.
c. Die Trägerfolie weist eine Dicke im Bereich von 10 µm bis 120 µm auf.
d. Die Klebeschicht weist eine Dicke im Bereich von 10 µm bis 80 µm auf.
e. Die Klebeschicht weist eine gleichmäßige Dicke auf.
f. Die Klebeschicht besteht aus einer homogenen Klebemasse.
g. Die Klebeschicht weist eine Fläche im Bereich von 10 cm² bis 8 m² auf.
h. Die Lackschicht weist eine Dicke im Bereich von 20 µm bis 150 µm auf.

5. Verfahren nach einem der Ansprüche 1, 3 oder 4, **gekennzeichnet durch** mindestens einen der folgenden zusätzlichen Schritte:
a. Zum Anpressen der Klebefolie (160) wird im Bereich zwischen der zu beklebenden Oberfläche (170; 172) und der Membran (120; 122) ein Unterdruck angelegt.
b. Der Unterdruck wird auf einen Wert ≤ 750 mbar eingestellt.
c. Die Membran (120; 122) wird durch den Unterdruck oder mit Hilfe des Unterdrucks in den gewölbten Zustand überführt.

6. Verfahren nach Anspruch 5, **gekennzeichnet durch** mindestens eines der folgenden zusätzlichen Merkmale:
a. Die elastische Membran (120; 122) wird in einem ersten Schritt von dem automatisierten System (200) an die Oberfläche (170; 172) herangeführt.
b. Im Bereich zwischen der zu beklebenden Oberfläche (170; 172) und der Membran (120; 122) wird in einem zweiten Schritt der Unterdruck angelegt.
c. In einem dritten Schritt wird die Membran (120; 122) mittels des angelegten Unterdrucks in den gewölbten Zustand mit der konvexen und der konkaven Seite überführt und
d. die Wölbung wird mittels des Unterdrucks verstärkt, bis die Klebeschicht der Klebefolie (160) von der konvexen Seite der Membran (120; 122) vollflächig an die Oberfläche (170; 172) gepresst wird.

7. Verfahren nach einem der vorhergehenden Ansprüche, **gekennzeichnet durch** mindestens eines der folgenden zusätzlichen Merkmale:
a. Die verwendete Membran (120; 122) besteht aus einem elastischen Polymermaterial.
b. Die verwendete Membran (120; 122) weist eine gleichmäßige Dicke auf.
c. Die verwendete Membran (122) weist Schwächungs- und oder Verstärkungsbereiche (124) zur gezielten Beeinflussung der Geometrie des gewölbten Zustands auf.

8. Verfahren nach einem der vorhergehenden Ansprüche, **gekennzeichnet durch** mindestens einen der folgenden zusätzlichen Schritte:
a. Die Membran (120; 122) wird durch einen Überdruck oder mit Hilfe eines Überdrucks in den gewölbten Zustand überführt.
b. Die Membran (120; 122) wird vor dem Anpressen der Klebefolie (160) erwärmt oder gekühlt.

9. Verfahren nach einem der Ansprüche 5 bis 8, **gekennzeichnet durch** mindestens eines der folgenden zusätzlichen Merkmale:
a. Der Unterdruck wird in Abhängigkeit des Drucks, den die Membran (120; 122) über die Klebefolie (160) auf die zu beklebende Oberfläche (170; 172) ausübt, variiert.
b. Bei einem Anstieg des von der Membran (120; 122) ausgeübten Drucks auf die zu beklebende Oberfläche (170; 172) wird der Unterdruck erhöht.

10. Verfahren nach einem der vorhergehenden Ansprüche, **gekennzeichnet durch** mindestens eines der folgenden zusätzlichen Merkmale:
a. Das Positionieren der Klebefolie (160) zwischen der Oberfläche (170; 172) und der elastischen Membran (120; 122) erfolgt mit Hilfe einer Montagefolie (150), an der die Klebefolie (160) mit ihrer der Klebeschicht abgewandten Seite haftet.
b. Zum Positionieren der Klebefolie (160) wird die Montagefolie (150) an oder in einem Rahmen (130) fixiert.
c. Nach dem Anpressen der Klebefolie (160) an die Oberfläche (170; 172) wird die Montagefolie (150) von der Klebefolie (160) abgezogen.

11. Werkzeug zum Aufbringen einer Klebefolie (160) auf eine Oberfläche (170; 172) einer mit einem getrockneten und/oder ausgehärteten mindestens einen Lack beschichteten Kraftfahrzeugkarosserie oder eines daran montierten Anbauteils, in einem Verfahren nach einem der vorhergehenden Ansprüche, **gekennzeichnet durch** die folgenden Merkmale:
a. Es umfasst die elastische Membran (120; 122).
b. Es umfasst ein Mittel zur Fixierung der Klebefolie (160) in paralleler Ausrichtung zu der Membran (120; 122).
c. Es umfasst einen Rahmen, der dazu ausgebildet ist, gemeinsam mit der zu beklebenden Oberfläche (170; 172) und der Membran (120; 122) eine Unterdruckkammer (141) zu bilden, in der die Klebefolie (160) angeordnet ist und in welche die Membran (120; 122) sich beim Beaufschlagen der Unterdruckkammer (141) mit einem Unterdruck wölben kann.

12. Werkzeug nach Anspruch 11, **gekennzeichnet durch** mindestens eines der folgenden zusätzlichen Merkmale:
a. Der Rahmen ist rechteckig ausgebildet.w
b. Der Rahmen weist eine erste Öffnung auf, die von der Membran (120; 122) verschlossen ist.
c. Der Rahmen mindestens ein elastisches Dichtelement (144), das dichtend auf der Oberfläche (170; 172) aufliegen kann.
d. Der Rahmen umfasst eine zweite Öffnung, an deren Rändern das mindestens eine elastische Dichtelement (122) fixiert ist.
e. Der Rahmen umfasst mindestens einen Anschluss (148) für eine Unterdruckquelle, über den die Unterdruckkammer (141) mit Unterdruck beaufschlagt werden kann.
f. Der Rahmen umfasst als Mittel zur Fixierung der Klebefolie (160) mindestens eine Halterung.

13. Werkzeug nach Anspruch 11 oder nach Anspruch 12, **gekennzeichnet durch** mindestens eines der folgenden zusätzlichen Merkmale:
a. Der Rahmen ist aus zwei oder mehr Teilrahmen (130; 140) zusammengesetzt.
b. Der Rahmen ist rechteckig ausgebildet und aus den zwei oder mehr rechteckigen Teilrahmen 130; 140) zusammengesetzt.
c. Der Rahmen umfasst einen ersten rechteckigen Teilrahmen (140), an dem das mindestens eine elastischen Dichtelement (144) fixiert ist und der den mindestens einen Anschluss (148) für eine Unterdruckquelle umfasst.
d. Der Rahmen umfasst einen zweiten rechteckigen Teilrahmen (130), der die mindestens eine Halterung für die Klebefolie (160) umfasst.

14. Werkzeug nach einem der Ansprüche 11 bis 13, **gekennzeichnet durch** mindestens eines der folgenden zusätzlichen Merkmale:
a. Es umfasst eine Druckausgleichskammer (112), die unter anderem von der Membran (120; 122) begrenzt wird.
b. Es umfasst einen Anschluss für eine Druck- oder eine Unterdruckquelle, der in die Druckausgleichskammer (112) führt.
c. Es umfasst ein Ventil (114), über das die Druckausgleichskammer (112) belüftet werden kann.

15. Werkzeug nach einem der Ansprüche 11 bis 14, **gekennzeichnet durch** das folgende zusätzliche Merkmal:
a. Es ist an einem automatisierten System (200) fixiert und/oder **dadurch gekennzeichnet, dass** es in einer Fertigungsstraße zur Produktion von Kraftfahrzeugen angeordnet ist.

## Claims

1. Method for producing motor vehicles, comprising the steps
a. coating a motor vehicle body with at least one paint
b. drying and/or hardening the at least one paint
c. mounting attachment parts on load-bearing components of the motor vehicle body coated with the at least one paint that has been dried and/or hardened, as well as
d. applying an adhesive film (160), which comprises an adhesive layer, to a surface (170; 172) of the motor vehicle body coated with the at least one paint that has been dried and/or hardened or of one of the attachment parts mounted thereon
wherein, for applying the adhesive film (160)
e. the adhesive film (160) is positioned between the surface (170; 172) and an elastic membrane (120; 122) using an automated system (200), and
f. the elastic membrane (120; 122) is transformed at least in parts into a curved state with a convex and a concave side and is brought into contact with the surface (170; 172) with the convex side in front, with the result that the adhesive layer of the adhesive film (160) is pressed onto the surface (170; 172) by the membrane (120; 122) over the entire surface area.

2. Method according to claim 1, **characterised by** the following additional steps:
a. the elastic membrane (120; 122) is transformed at least in parts into the curved state with the convex and the concave side and
b. the automated system (200) brings the membrane (120; 122) up to the surface (170; 172) with the convex side in front until the adhesive layer of the adhesive film (160) is pressed onto the surface (170; 172) by the membrane (120; 122) over the entire surface area.

3. Method according to claim 1, **characterised by** the following additional steps:
a. The elastic membrane (120; 122) is brought up to the surface (170; 172) in one step by the automated system (200), and
b. the membrane (120; 122) is transformed at least in parts into a curved state with a convex and a concave side, and
c. the curvature is reinforced until the adhesive layer of the adhesive film (160) is pressed onto the surface (170; 172) over the entire surface area by the convex side of the membrane (120; 122).

4. Method according to one of the preceding claims, **characterised by** at least one of the following additional features:
a. The adhesive film (160) comprises a carrier film which has the adhesive layer on one side and a paint layer on another side
b. The carrier film is a plastic film, a metal film or a metal/plastic composite film
c. The carrier film has a thickness in the range of 10 µm to 120 µm
d. The adhesive layer has a thickness in the range of 10 µm to 80 µm
e. The adhesive layer has a uniform thickness
f. The adhesive layer consists of a homogeneous adhesive mass
g. The adhesive layer has a surface area in the range of 10 cm² to 8 m²
h. The paint layer has a thickness in the range of 20 µm to 150 µm.

5. Method according to one of claims 1, 3 or 4, **characterised by** at least one of the following additional steps:
a. To press the adhesive film (160) on, a negative pressure is applied in the region between the surface (170; 172) to be provided with adhesive and the membrane (120; 122)
b. The negative pressure is set to a value of ≤ 750 mbar
c. The membrane (120; 122) is transformed into the curved state by the negative pressure or by means of the negative pressure.

6. Method according to claim 5, **characterised by** at least one of the following additional features:
a. In a first step, the elastic membrane (120; 122) is brought up to the surface (170; 172) by the automated system (200)
b. In a second step, the negative pressure is applied in the region between the surface (170; 172) to be provided with adhesive and the membrane (120; 122)
c. In a third step, the membrane (120; 122) is transformed into the curved state with the convex and concave sides by means of the applied negative pressure, and
d. the curvature is reinforced by means of the negative pressure until the adhesive layer of the adhesive film (160) is pressed onto the surface (170; 172) over the entire surface area by the convex side of the membrane (120; 122).

7. Method according to one of the preceding claims, **characterised by** at least one of the following additional features:
a. The membrane (120; 122) used consists of an elastic polymer material
b. The membrane (120; 122) used has a uniform thickness
c. The membrane (122) used has weakening and/or reinforcing regions (124) for the targeted influencing of the geometry of the curved state.

8. Method according to one of the preceding claims, **characterised by** at least one of the following additional steps:
a. The membrane (120; 122) is transformed into the curved state by a positive pressure or by means of a positive pressure
b. The membrane (120; 122) is heated or cooled before the adhesive film (160) is pressed on.

9. Method according to one of claims 5 to 8, **characterised by** at least one of the following additional features:
a. The negative pressure is varied depending on the pressure that the membrane (120; 122) exerts via the adhesive film (160) on the surface (170; 172) to be provided with adhesive
b. If the pressure exerted by the membrane (120; 122) on the surface (170; 172) to be provided with adhesive increases, the negative pressure is increased.

10. Method according to one of the preceding claims, **characterised by** at least one of the following additional features:
a. The adhesive film (160) is positioned between the surface (170; 172) and the elastic membrane (120; 122) by means of a mounting film (150), to which the adhesive film (160) adheres with its side which faces away from the adhesive layer
b. To position the adhesive film (160), the mounting film (150) is fixed on or in a frame (130)
c. After the adhesive film (160) has been pressed onto the surface (170; 172), the mounting film (150) is pulled off from the adhesive film (160).

11. Tool for applying an adhesive film (160) to a surface (170; 172) of a motor vehicle body coated with at least one paint that has been dried and/or hardened or of an attachment part mounted thereon, in a method according to one of the preceding claims, **characterised by** the following features:
a. It comprises the elastic membrane (120; 122)
b. It comprises a means for fixing the adhesive film (160) in parallel alignment in relation to the membrane (120; 122)
c. It comprises a frame which is designed to form, together with the surface (170; 172) to be provided with adhesive and the membrane (120; 122), a negative-pressure chamber (141) in which the adhesive film (160) is arranged and into which the membrane (120; 122) can curve when the negative-pressure chamber (141) is subjected to a negative pressure.

12. Tool according to claim 11, **characterised by** at least one of the following additional features:
a. The frame is rectangular
b. The frame has a first opening, which is closed by the membrane (120; 122)
c. The frame comprises at least one elastic sealing element (144) which can lie in a sealing manner against the surface (170; 172)
d. The frame comprises a second opening, at the edges of which the at least one elastic sealing element (122) is fixed
e. The frame comprises at least one connection (148) for a negative-pressure source, via which the negative-pressure chamber (141) can be subjected to negative pressure
f. The frame comprises at least one attachment as means for fixing the adhesive film (160).

13. Tool according to claim 11 or according to claim 12, **characterised by** at least one of the following additional features:
a. The frame is composed of two or more sub-frames (130; 140)
b. The frame is rectangular and composed of the two or more rectangular sub-frames 130; 140)
c. The frame comprises a first rectangular sub-frame (140), on which the at least one elastic sealing element (144) is fixed and which comprises the at least one connection (148) for a negative-pressure source
d. The frame comprises a second rectangular sub-frame (130), which comprises the at least one attachment for the adhesive film (160).

14. Tool according to one of claims 11 to 13, **characterised by** at least one of the following additional features:
a. It comprises a pressure equalising chamber (112) that is delimited, inter alia, by the membrane (120; 122)
b. It comprises a connection for a pressure source or a negative-pressure source that leads into the pressure equalising chamber (112)
c. It comprises a valve (114) via which the pressure equalising chamber (112) can be ventilated.

15. Tool according to one of claims 11 to 14, **characterised by** the following additional feature:
a. It is fixed on an automated system (200), and/or **characterised in that** it is arranged in an assembly line for producing motor vehicles.

## Revendications

1. Procédé de production de véhicules automobiles, comprenant les étapes suivantes :
a. enduction d'une carrosserie de véhicule automobile avec au moins une peinture,
b. séchage et/ou durcissement de la peinture, au nombre d'au moins une,
c. montage d'éléments rapportés sur des composants porteurs de la carrosserie de véhicule automobile revêtue de la peinture séchée et/ou durcie, au nombre d'au moins une, et
d. application d'un film adhésif (160), qui comporte une couche adhésive, sur une surface (170 ; 172) de la carrosserie de véhicule automobile revêtue de la peinture séchée et/ou durcie, au nombre d'au moins une, ou d'un des éléments rapportés monté sur celle-ci,
sachant que pour l'application du film adhésif (160),
e. le film adhésif (160) est positionné entre la surface (170 ; 172) et une membrane (120 ; 122) élastique à l'aide d'un système automatisé (200), et
f. la membrane (120 ; 122) élastique est amenée au moins localement à un état bombé, avec une face convexe et une face concave, et est mise en contact, avec la face convexe en premier, avec la surface (170 ; 172), de sorte que la couche adhésive du film adhésif (160) est pressée avec toute sa surface contre la surface (170 ; 172) par la membrane (120 ; 122).

2. Procédé selon la revendication 1, **caractérisé en ce qu'**il comprend les étapes supplémentaires suivantes :
a. la membrane (120 ; 122) élastique est amenée au moins localement à l'état bombé avec la face convexe et la face concave, et
b. la membrane (120 ; 122) est approchée par le système automatisé (200), avec la face convexe en premier, de la surface (170 ; 172), jusqu'à ce que la couche adhésive du film adhésif (160) soit pressée avec toute sa surface contre la surface (170 ; 172) par la membrane (120 ; 122).

3. Procédé selon la revendication 1, **caractérisé en ce qu'**il comprend les étapes supplémentaires suivantes :
a. la membrane (120 ; 122) élastique est approchée dans une étape de la surface (170 ; 172) par le système automatisé (200), et
b. la membrane (120 ; 122) est amenée au moins localement à un état bombé, avec une face convexe et une face concave, et
c. le bombement est intensifié jusqu'à ce que la couche adhésive du film adhésif (160) soit pressée avec toute sa surface contre la surface (170 ; 172) par la face convexe de la membrane (120 ; 122).

4. Procédé selon l'une des revendications précédentes, **caractérisé en ce qu'**il présente au moins une des caractéristiques supplémentaires suivantes :
a. le film adhésif (160) comprend un film de support qui présente la couche adhésive sur une face et une couche de peinture sur une autre face ;
b. le film de support est un film en matière plastique, un film métallique ou un film composite en métal-matière plastique ;
c. le film de support présente une épaisseur comprise dans la plage allant de 10 µm à 120 µm ;
d. la couche adhésive présente une épaisseur comprise dans la plage allant de 10 µm à 80 µm ;
e. la couche adhésive présente une épaisseur uniforme ;
f. la couche adhésive est constituée d'une masse adhésive homogène ;
g. la couche adhésive présente une superficie comprise dans la plage allant de 10 cm² à 8 m² ;
h. la couche de peinture présente une épaisseur comprise dans la plage allant de 20 µm à 150 µm.

5. Procédé selon l'une des revendications 1, 3 ou 4, **caractérisé en ce qu'**il comprend au moins une des étapes supplémentaires suivantes :
a. pour appliquer le film adhésif (160) par pression, un vide est appliqué dans la région entre la surface (170 ; 172) à recouvrir et la membrane (120 ; 122) ;
b. le vide est réglé à une valeur ≤ 750 mbar ;
c. la membrane (120 ; 122) est amenée à l'état bombé par le vide ou à l'aide du vide.

6. Procédé selon la revendication 5, **caractérisé en ce qu'**il présente au moins une des caractéristiques supplémentaires suivantes :
a. lors d'une première étape, la membrane (120 ; 122) élastique est approchée de la surface (170 ; 172) par le système automatisé (200) ;
b lors d'une deuxième étape, le vide est appliqué dans la région entre la surface (170 ; 172) à recouvrir et la membrane (120 ; 122) ;
c. lors d'une troisième étape, la membrane (120 ; 122) est amenée à l'état bombé, avec la face convexe et la face concave, à l'aide du vide appliqué ; et
d le bombement est intensifié à l'aide du vide, jusqu'à ce que la couche adhésive du film adhésif (160) soit appliquée sur toute la surface contre la surface (170 ; 172), par la face convexe de la membrane (120 ; 122).

7. Procédé selon l'une des revendications précédentes, **caractérisé en ce qu'**il présente au moins une des caractéristiques supplémentaires suivantes :
a. la membrane (120 ; 122) utilisée est constituée d'un matériau polymère élastique ;
b. la membrane (120 ; 122) utilisée présente une épaisseur régulière ;
c. la membrane (120 ; 122) utilisée présente des zones d'affaiblissement et/ou de renfort (124) en vue d'influencer de manière ciblée la géométrie de l'état bombé.

8. Procédé selon l'une des revendications précédentes, **caractérisé en ce qu'**il comprend au moins une des étapes supplémentaires suivantes :
a. la membrane (120 ; 122) est amenée à l'état bombé par une surpression ou à l'aide d'une surpression ;
b. la membrane (120 ; 122) est chauffée ou refroidie avant l'application par pression du film adhésif (160).

9. Procédé selon l'une des revendications 5 à 8, **caractérisé en ce qu'**il présente au moins une des caractéristiques supplémentaires suivantes :
a. le vide est modifié en fonction de la pression exercée par la membrane (120 ; 122) sur la surface (170 ; 172) à recouvrir, par l'intermédiaire du film adhésif (160) ;
b. en cas d'augmentation de la pression exercée par la membrane (120 ; 122) sur la surface (170 ; 172) à recouvrir, le vide est augmenté.

10. Procédé selon l'une des revendications précédentes, **caractérisé en ce qu'**il présente au moins une des caractéristiques supplémentaires suivantes :
a. le positionnement du film adhésif (160) entre la surface (170 ; 172) et la membrane (120 ; 122) élastique s'effectue à l'aide d'un film de montage (150) auquel adhère le film adhésif (160) avec sa face détournée de la couche adhésive ;
b. pour le positionnement du film adhésif (160), le film de montage (150) est fixé sur ou dans un cadre (130) ;
c. après l'application du film adhésif (160) par pression contre la surface (170 ; 172), le film de montage (150) est retiré du film adhésif (160).

11. Outil d'application d'un film adhésif (160) sur une surface (170 ; 172) d'une carrosserie de véhicule automobile revêtue d'une peinture séchée et/ou durcie, au nombre d'au moins une, ou d'un élément rapporté monté sur la carrosserie, avec un procédé selon l'une des revendications précédentes, **caractérisé en ce qu'**il présente les caractéristiques suivantes :
a. il comprend la membrane (120 ; 122) élastique ;
b. il comprend un moyen de fixation du film adhésif (160) dans une orientation parallèle à la membrane (120 ; 122) ;
c. il comprend un cadre qui est agencé pour former, conjointement avec la surface (170 ; 172) à recouvrir et la membrane (120 ; 122), une chambre à vide (141) dans laquelle est disposé le film adhésif (160) et vers l'intérieur de laquelle la membrane (120 ; 122) peut s'incurver lorsqu'un vide est appliqué à la chambre à vide (141).

12. Outil selon la revendication 11, **caractérisé en ce qu'**il présente au moins une des caractéristiques supplémentaires suivantes :
a. le cadre est réalisé sous une forme rectangulaire.w
b. le cadre présente une première ouverture qui est fermée par la membrane (120 ; 122) ;
c. le cadre au moins un élément d'étanchéité (144) élastique qui peut être appliqué sur la surface (170 ; 172) de manière à établir l'étanchéité ;
d. le cadre présente une deuxième ouverture sur les bords de laquelle est fixé l'élément d'étanchéité (122) élastique, au nombre d'au moins un ;
e. le cadre comprend au moins un raccord (148) pour une source à vide, par l'intermédiaire duquel un vide peut être appliqué à la chambre à vide (141) ;
f. le cadre comprend au moins un support en tant que moyen de fixation du film adhésif (160).

13. Outil selon la revendication 11 ou selon la revendication 12, **caractérisé en ce qu'**il présente au moins une des caractéristiques supplémentaires suivantes :
a. le cadre se compose de deux ou plus de deux cadres élémentaires (130 ; 140) ;
b. le cadre est réalisé sous une forme rectangulaire et se compose des deux ou plus de deux cadres élémentaires (130 ; 140) ;
c. le cadre comprend un premier cadre élémentaire (140) rectangulaire, sur lequel est fixé l'élément d'étanchéité (144) élastique, au nombre d'au moins un, et qui comporte le raccord (148), au nombre d'au moins un, pour une source de vide ;
d. le cadre comprend un deuxième cadre élémentaire (130) rectangulaire qui comporte le support, au nombre d'au moins un, pour le film adhésif (160).

14. Outil selon l'une des revendications 11 à 13, **caractérisé en ce qu'**il présente au moins une des caractéristiques supplémentaires suivantes :
a. il comprend une chambre de compensation de pression (112) qui est délimitée entre autres par la membrane (120 ; 122) ;
b. il comprend un raccord pour une source de pression ou de vide, qui mène dans la chambre de compensation de pression (112) ;
c. il comprend une valve (114), par l'intermédiaire de laquelle la chambre de compensation de pression (112) peut être ventilée.

15. Outil selon l'une des revendications 11 à 14, **caractérisé en ce qu'**il présente la caractéristique supplémentaire suivante :
a. il est fixé à un système automatisé (200),
et/ou **caractérisé en ce qu'**il est disposé dans une ligne de fabrication destinée à la production de véhicules automobiles.
